(19) Europäisches Patentamt / European Patent Office / Office européen des brevets

(11) **EP 4 496 328 A1**

(12) **EUROPEAN PATENT APPLICATION**
published in accordance with Art. 153(4) EPC

(43) Date of publication:
**22.01.2025 Bulletin 2025/04**

(21) Application number: **23770377.2**

(22) Date of filing: **28.02.2023**

(51) International Patent Classification (IPC):
*H04N 21/854* (2011.01)  *G06T 17/00* (2006.01)
*G06T 19/00* (2011.01)  *H04N 19/46* (2014.01)
*H04N 21/238* (2011.01)  *H04N 21/43* (2011.01)

(52) Cooperative Patent Classification (CPC):
G06T 17/00; G06T 19/00; H04N 19/46;
H04N 21/238; H04N 21/43; H04N 21/854

(86) International application number:
**PCT/JP2023/007210**

(87) International publication number:
**WO 2023/176419 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.03.2022 US 202263320767 P**

(71) Applicant: **Sony Group Corporation**
**Tokyo 108-0075 (JP)**

(72) Inventors:
• **TAKAHASHI, Ryohei**
**Tokyo 108-0075 (JP)**
• **HIRABAYASHI, Mitsuhiro**
**Tokyo 108-0075 (JP)**

(74) Representative: **D Young & Co LLP**
**3 Noble Street**
**London EC2V 7BQ (GB)**

(54) **INFORMATION PROCESSING DEVICE AND METHOD**

(57) The present disclosure relates to an information processing device and method capable of preventing a reduction in quality of reproduction and display of 3D data.

On the basis of first information on a display timing of a sub-frame stored as metadata in a file, a sample is extracted including the sub-frame from a bit stream stored in the file in time for the display timing of the sub-frame; the extracted sample is decoded; and a point cloud for the sub-frame is constructed on the basis of the first information in time for the display timing of the sub-frame included in the decoded sample. The present disclosure can be applied to, for example, an information processing device, an information processing method, or the like.

Fig. 8

| METHOD 1 | INFORMATION ON DISPLAY TIMING OF SUB-FRAME IS STORED IN META INFORMATION STORAGE AREA. |
| METHOD 1-1 | INFORMATION ON DISPLAY TIMING OF SUB-FRAME IS OFFSET FROM SAMPLE DISPLAY TIMING. |
| METHOD 1-2 | INFORMATION ON DISPLAY TIMING OF SUB-FRAME IS SUB-FRAME DISPLAY ORDER AND SUB-FRAME DISPLAY PERIOD. |

**Description**

[Technical Field]

The present disclosure relates to an information processing device and method, and more particularly, to an information processing device and method capable of preventing a reduction in quality of reproduction and display of 3D data.

[Background Art]

In the related art, G-PCC (Geometry-based Point Cloud Compression) that is an encoding technology for encoding a point cloud that is a set of points having position information of a three-dimensional space and attribute information (e.g., a color, reflectivity, and the like) with a geometry representing a three-dimensional shape and attributes representing attribute information being divided is under standardization in MPEG-I Part 9 (ISO/IEC (International Organization for Standardization/International Electrotechnical Commission) 23090-9) (e.g., see NPL 1).
In addition, there is ISOBMFF (International Organization for Standardization Base Media File Format) that is a file container specification of an international standard technology MPEG-4 (Moving Picture Experts Group - 4) of moving picture compression (e.g., see NPL 2).
In addition, for the purpose of efficiency of reproduction processing and network distribution from a local storage of a G-PCC bit stream that is a bit stream of encoded data encoded using this G-PCC, a method for storing a G-PCC bit stream in an ISOBMFF file is under standardization in MPEG-I Part 18 (ISO/IEC 23090-18) (e.g., see NPL 3).
Incidentally, to encode a point cloud, there is a method of encoding a combined frame in which a plurality of frames of the point cloud are combined as sub-frames, and using the resulting combined frame as a sample (e.g., NPL 4).

[Citation List]

[Non Patent Literature]

[NPL 1]
"Information technology - MPEG-I (Coded Representation of Immersive Media) - Part 9: Geometry-based Point Cloud Compression" ("Text of ISO/IEC FDIS 23090-9 Geometry-based Point Cloud Compression (draft 20)"), ISO/IEC 23090-9:2022(E), MDS19617, 2022/3/13
[NPL 2]
"Information technology - Coding of audio-visual objects - Part 12: ISO base media file format, TECHNICAL CORRIGENDUM 1", ISO/IEC FDIS 14496-12:2020(E), ISO/IEC 14496-12: 2015/Cor.1, ISO/IEC JTC 1/SC 29/WG 11, 2016/6/3
[NPL 3]
Sejin Oh, Ryohei Takahashi, Youngkwon Lim, "Draft text of ISO/IEC FDIS 23090-18 Carriage of Geometry-based Point Cloud Compression Data", ISO/IEC JTC 1/SC 29/WG 03 N0311, MDS20565, 2021/10/2
[NPL 4]
"G-PCC codec description", ISO/IEC JTC 1/SC 29/WG 7 N 0215, MDS20983, 2021/12/29

[Summary]

[Technical Problem]

However, in the method described in NPL 4, the decoder does not know at what timing each sample should be acquired and decoded before decoding a bit stream. This could result in a reduction in quality of 3D data reproduction and display, for example, due to delays in reproduction processing or frame loss during display.
The present disclosure has been made in view of such circumstances and aims to prevent a reduction in quality of reproduction and display of 3D data.

[Solution to Problem]

An information processing device according to one aspect of the present technology is an information processing device including: an extraction unit that extracts, based on first information on a display timing of a sub-frame stored as metadata in a file, a sample including the sub-frame from a bit stream stored in the file in time for the display timing of the sub-frame; a decoding unit that decodes the extracted sample; and a construction unit that constructs a point cloud for the sub-frame based on the first information in time for the display timing of the sub-frame included in the decoded sample.

An information processing method according to one aspect of the present technology is an information processing method including: extracting, based on first information on a display timing of a sub-frame stored as metadata in a file, a sample including the sub-frame from a bit stream stored in the file in time for the display timing of the sub-frame; decoding the extracted sample; and constructing a point cloud for the sub-frame based on the first information in time for the display timing of the sub-frame included in the decoded sample.

An information processing device according to another aspect of the present technology is an information processing device including: an encoding unit that encodes as a sample a combined frame in which a plurality of frames are combined as sub-frames to generate encoded data; a bit stream generation unit that generates a bit stream including the encoded data and generates first information on display timings of the sub-frames based on the bit stream; and a file generation unit that generates a file for storing the bit stream and stores the first information as metadata in the file.

An information processing method according to another aspect of the present technology is an information processing method including: encoding as a sample a combined frame in which a plurality of frames are combined as sub-frames to generate encoded data; generating a bit stream including the encoded data; generating first information on display timings of the sub-frames based on the bit stream; generating a file for storing the bit stream; and storing the first information as metadata in the file.

In an information processing device and method according to one aspect of the present technology, based on first information on a display timing of a sub-frame stored as metadata in a file, a sample is extracted including the sub-frame from a bit stream stored in the file in time for the display timing of the sub-frame; the extracted sample is decoded; and a point cloud for the sub-frame is constructed on the basis of the first information in time for the display timing of the sub-frame included in the decoded sample.

In an information processing device and method according to another aspect of the present technology, a combined frame in which a plurality of frames are combined as sub-frames is encoded as a sample to generate encoded data; a bit stream is generated including the encoded data; first information on display timings of the sub-frames is generated on the basis of the bit stream; a file for storing the bit stream is generated; and the first information is stored as metadata in the file.

[Brief Description of Drawings]

[Fig. 1]

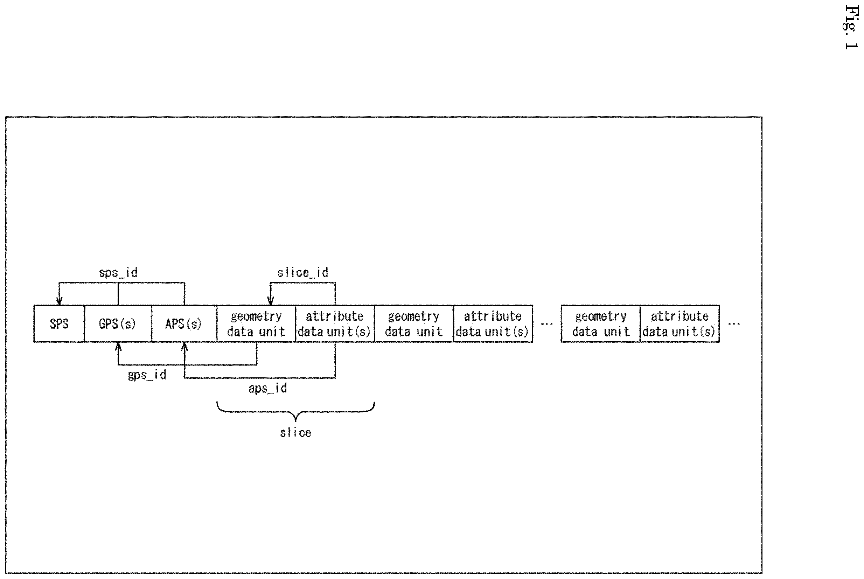

Fig. 1 illustrates an example of a structure of a G-PCC bit stream.
[Fig. 2]

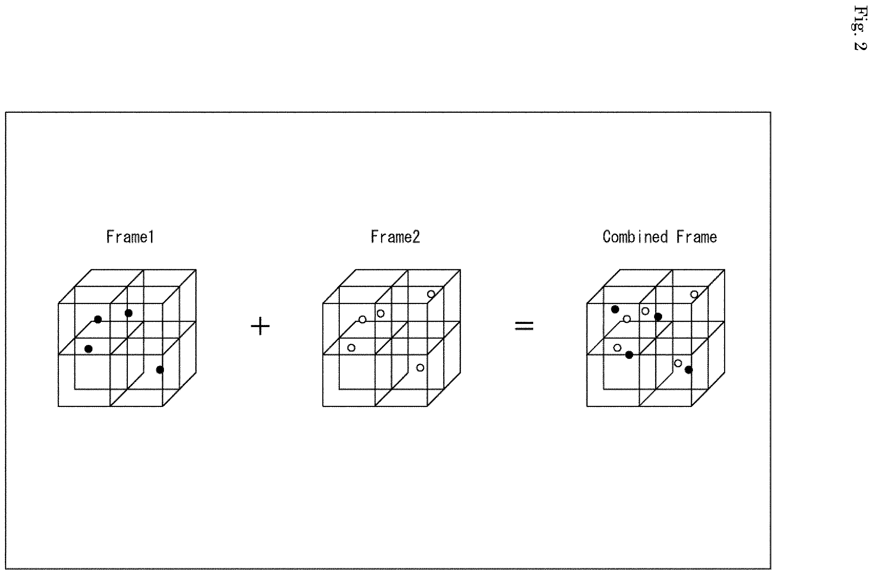

Fig. 2 illustrates a combined frame.
[Fig. 3]

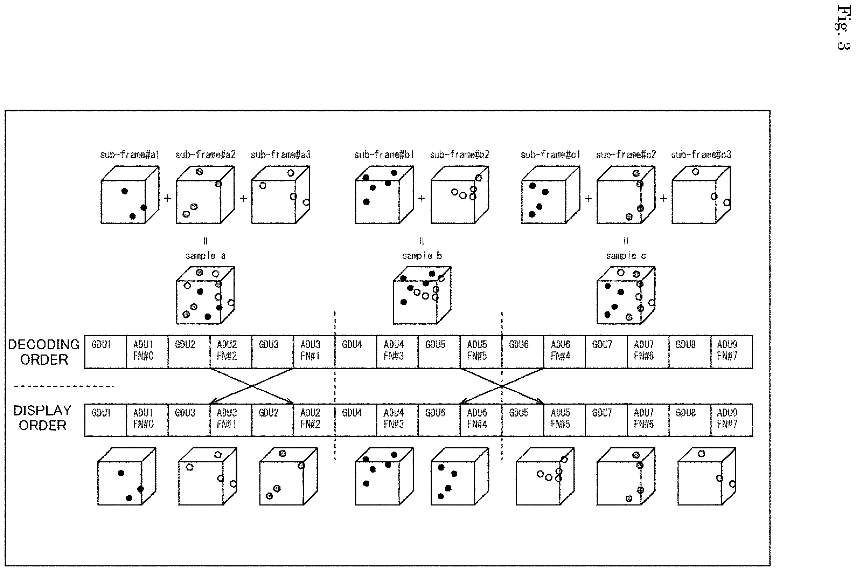

Fig. 3 illustrates frame number attribute.
[Fig. 4]

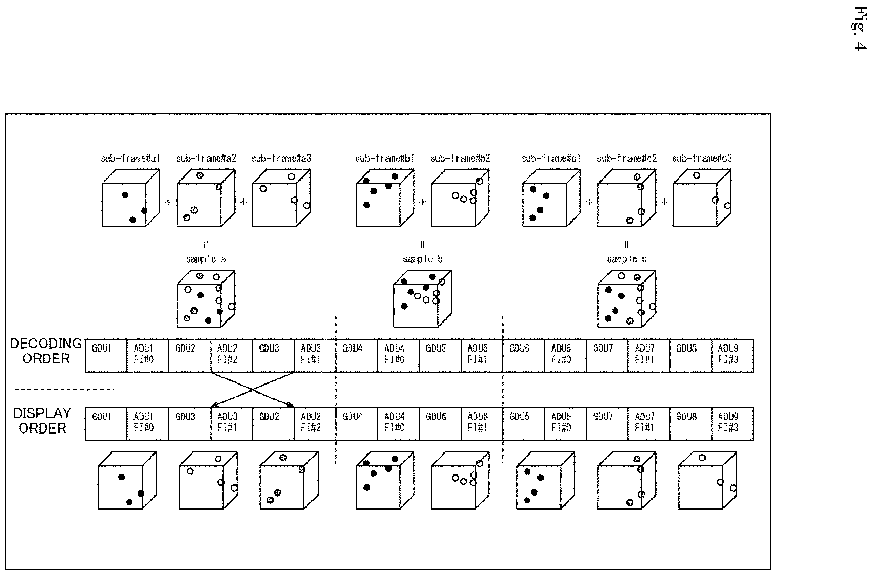

Fig. 4 illustrates frame index attribute.
[Fig. 5]

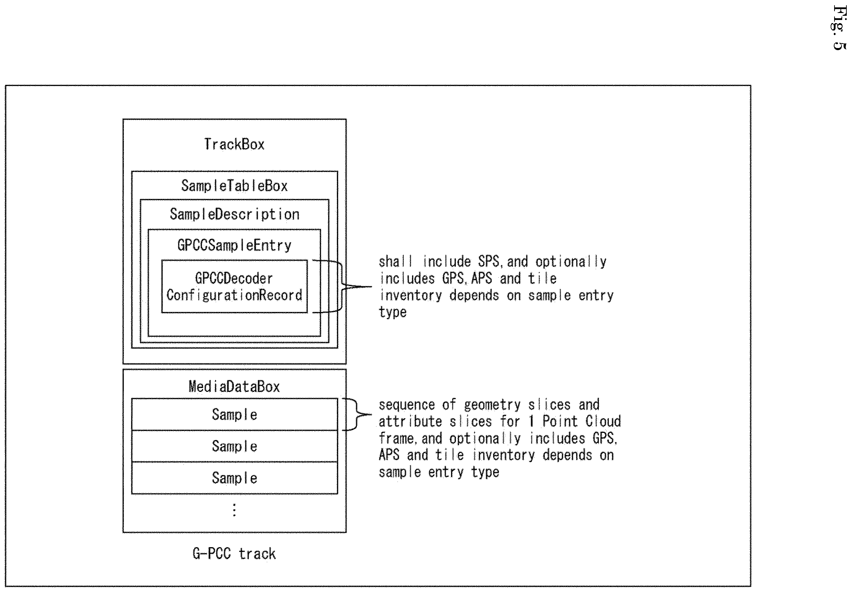

Fig. 5 illustrates an example of a structure of a G-PCC file.
[Fig. 6]

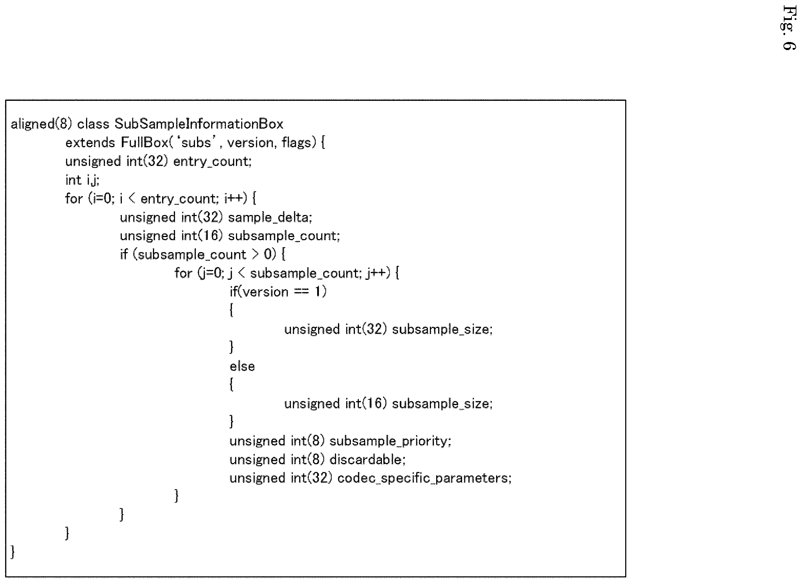

Fig. 6 illustrates an example of SubSampleInformationBox.
[Fig. 7]

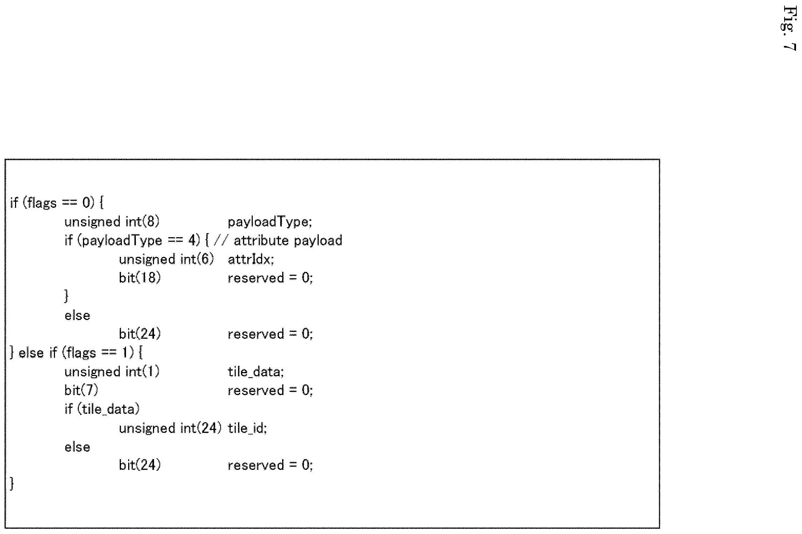

Fig. 7 illustrates an example of codec_specific_parameters.
[Fig. 8]

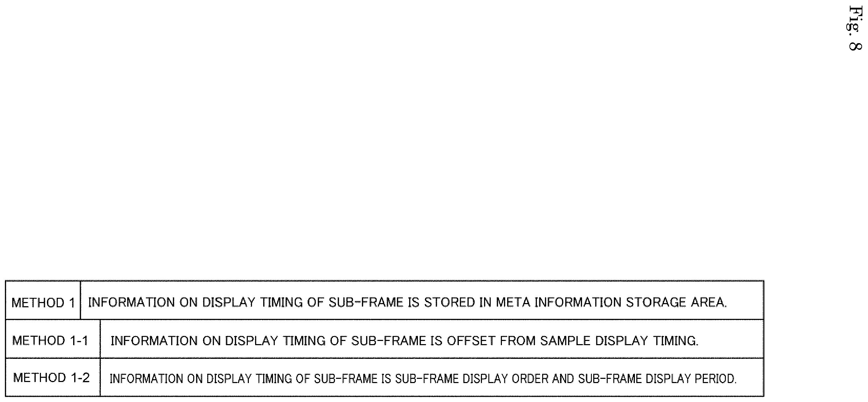

Fig. 8 illustrates an example of an encoding/decoding method.
[Fig. 9]

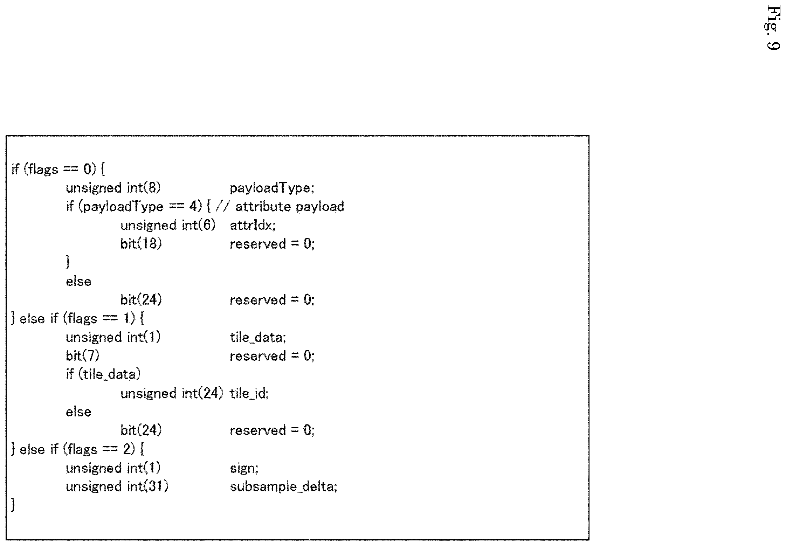

Fig. 9 illustrates an example of codec_specific_parameters.
[Fig. 10]

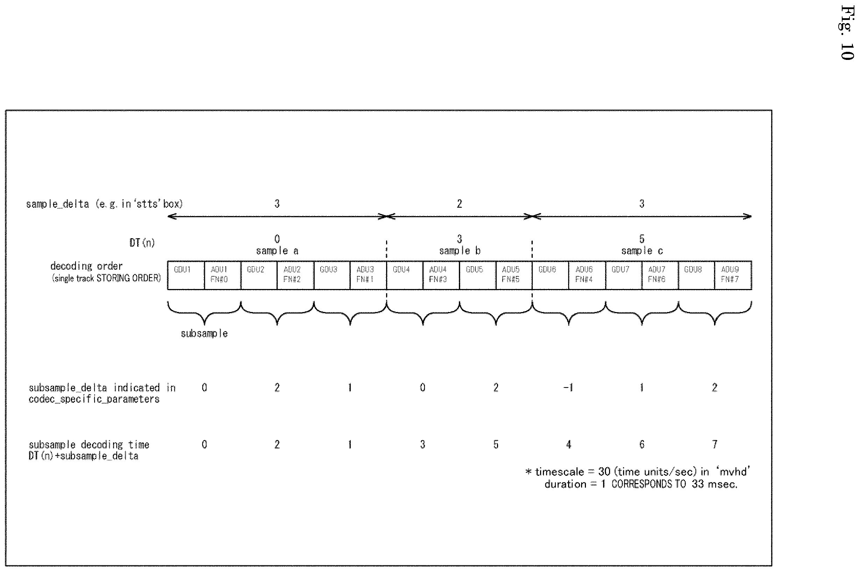

Fig. 10 illustrates an example of application of subsample_delta.
[Fig. 11]

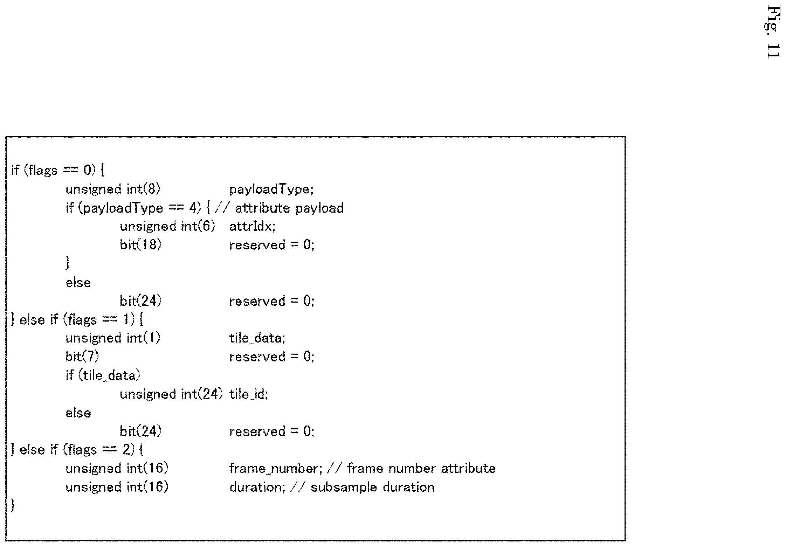

Fig. 11 illustrates an example of codec_specific_parameters.
[Fig. 12]

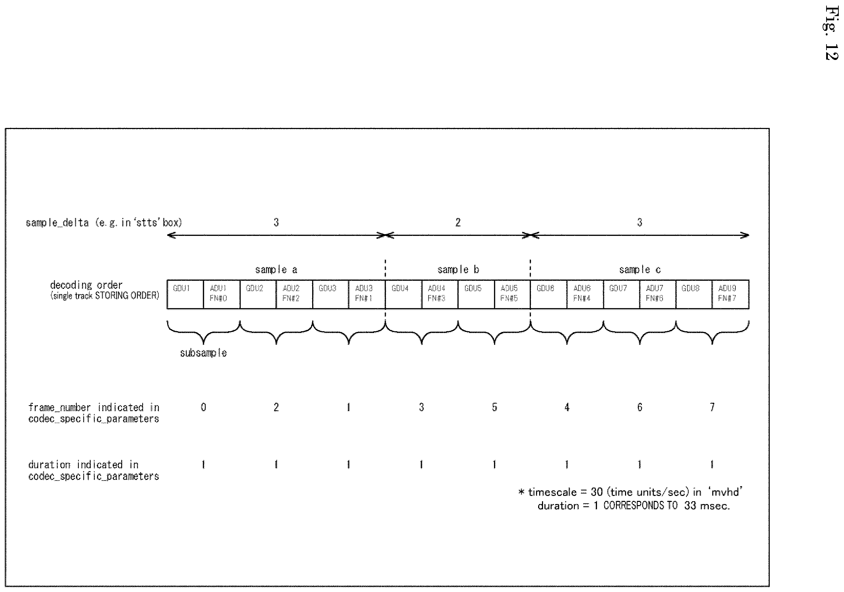

Fig. 12 illustrates an example of application of duration.
[Fig. 13]

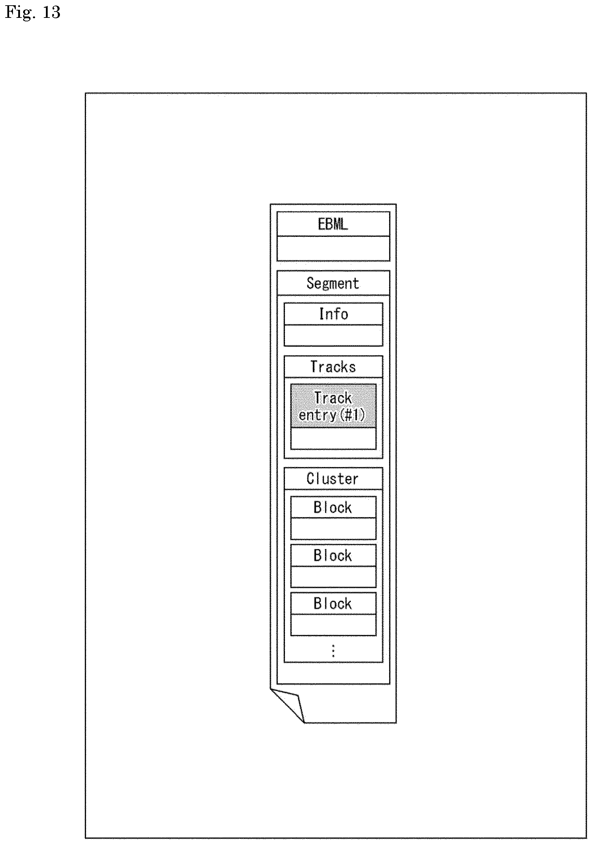

Fig. 13 illustrates a configuration example of a Matroska media container.
[Fig. 14]

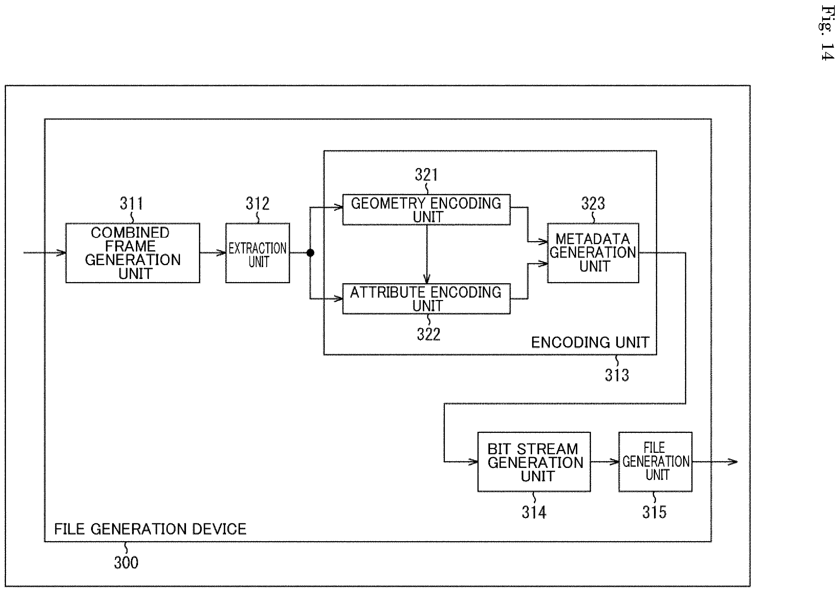

Fig. 14 is a block diagram illustrating a main configuration example of a file generation device.
[Fig. 15]

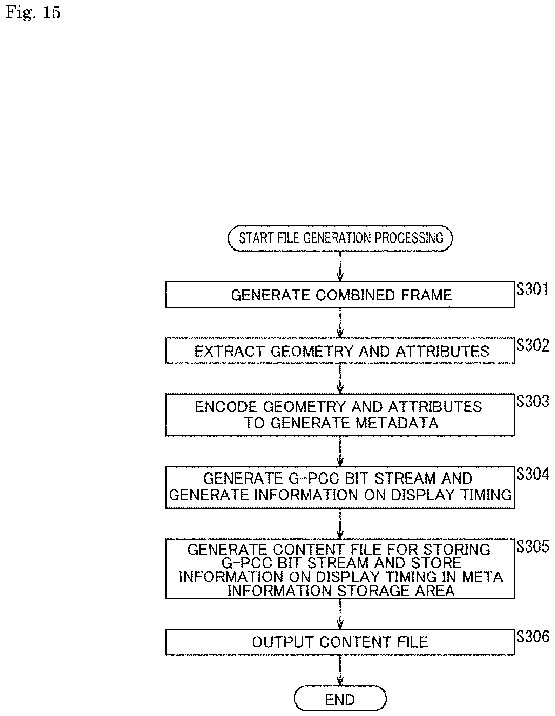

Fig. 15 is a flowchart illustrating an example of a flow of file generation processing.
[Fig. 16]

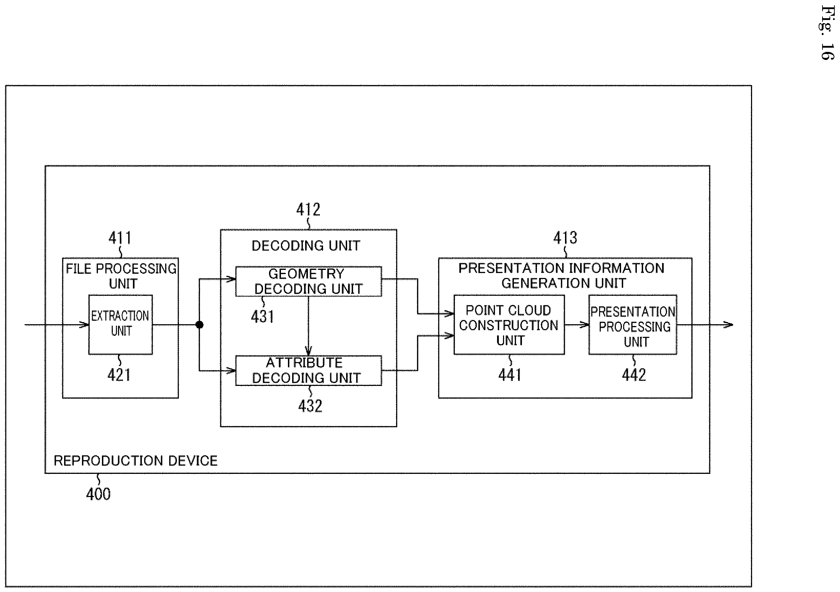

Fig. 16 is a block diagram illustrating a main configuration example of a reproduction device.
[Fig. 17]

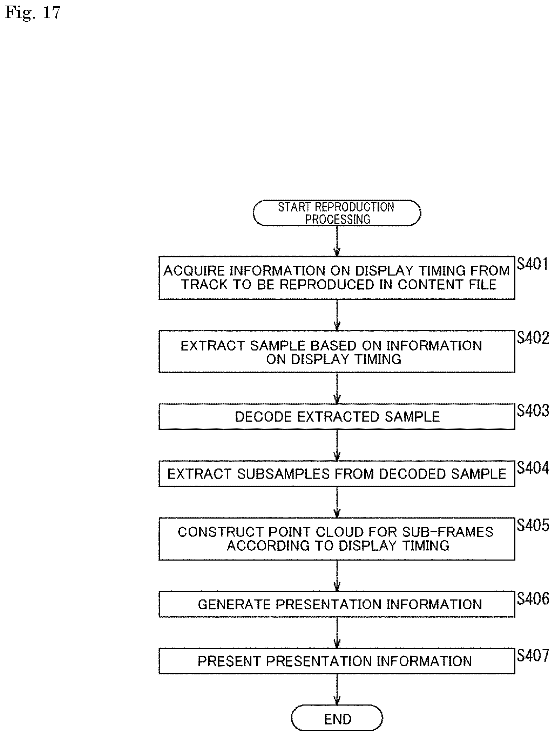

Fig. 17 is a flowchart illustrating an example of a flow of reproduction processing.
[Fig. 18]

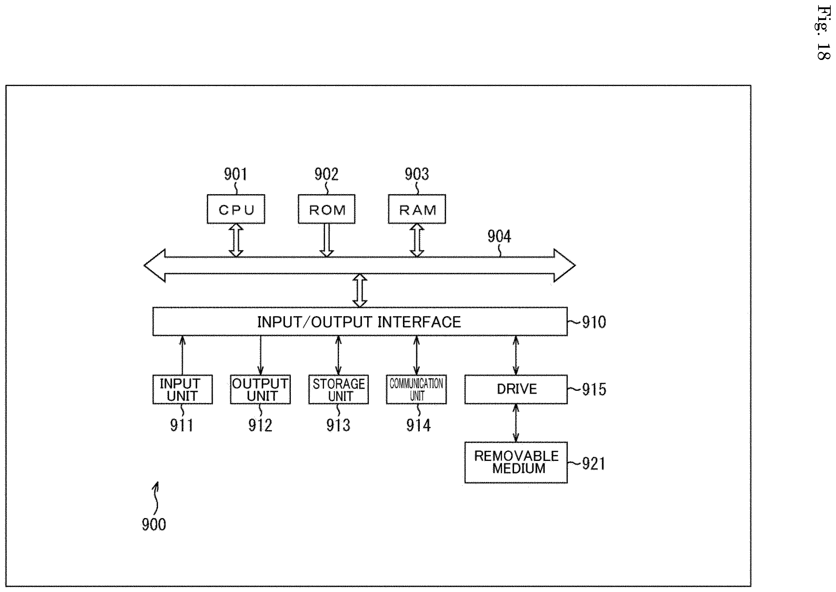

Fig. 18 is a block diagram illustrating a main configuration example of a computer.

[Description of Embodiments]

Hereinafter, modes for carrying out the present disclosure (hereinafter referred as embodiments) will be described. The descriptions will be given in the following order.

1. Literature and the like that support technical content and technical terms
2. Reproduction of combined frame
3. Transmission of information on display timing
4. First embodiment (file generation device, reproduction device)
5. Supplement

<1. Literature and the like that support technical content and technical terms>

The scope disclosed in the present technology is not limited to the content described in embodiments and also includes the content described in the following NPL, PTL and the like that were known at the time of filing and the content of other literature referred to in the following NPL, PTL, and the like.
[NPL 1] (described above)
[NPL 2] (described above)
[NPL 3] (described above)
[NPL 4] (described above)
[NPL 5] https:// www.matroska.org/index.html

In other words, the contents in the above-listed NPL, PTL, and the like and the contents of other literatures referred to in the above-listed PTL, and the like are also grounds for determining support requirements.

<2. Reproduction of combined frame>

<Point cloud>

In the related art, 3D data such as a point cloud expressing a three-dimensional structure by point position information, attribute information, or the like is present.
For example, in the case of a point cloud, a stereoscopic structure (an object having a three-dimensional shape) is expressed as a set of multiple points. The point cloud is composed of position information (also referred to as a geometry) and attribute information (also referred to as attributes) of each point. The attributes can include arbitrary information. For example, color information, reflectance information, normal line information, and the like of each point may be included in the attributes. In this manner, according to the point cloud, a data structure is relatively simple, and it is possible to express an arbitrary stereoscopic structure with sufficient accuracy by using a sufficiently large number of points.

<Overview of G-PCC>

In NPL 1, an encoding technology called Geometry-based Point Cloud Compression (G-PCC) that encodes this point cloud by dividing it into a geometry and an attribute is disclosed. The G-PCC is under standardization in MPEG-I Part 9 (ISO/IEC 23090-9).
The geometry is compressed, for example, by octree encoding. The octree encoding is an encoding system that performs encoding by converting a data structure of a geometry into an octree.

In this case, the geometry is expressed using a voxel, which is a three-dimensional region having a rectangular parallelepiped shape (including a cubic shape) of a hierarchical structure. In other words, it is expressed whether a point is present for each voxel. A voxel in which a point is present is divided, and presence/absence of a point in a small region after the division (a voxel of a low ranking) is expressed. For a voxel in which a point is present, such division is recursively repeated up to a lowest layer, whereby a hierarchical structure of voxels is formed.

The octree expresses such a voxel expression (presence/absence of a point for each voxel) as an octree. Each node of an octree corresponds to each voxel of a voxel expression. For example, a node corresponding to a voxel in which a point is present is expressed as a value of "1", and a node corresponding to a voxel in which no point is present is expressed as a value of "0". In a node (a node of a value of "1") corresponding to a voxel in which a point is present, a child node (a one-ranking lower node) is formed.

A bit stream of encoded data generated by encoding a geometry as described above will be also referred to as a geometry bit stream.

A technique such as Predicting Weight Lifting, Region Adaptive Hierarchical Transform (RAHT), Fix Weight Lifting, or the like is applied to compression of an attribute. A bit stream of encoded data generated by encoding an attribute is also referred to as an attribute bit stream. A bit stream acquired by combining a geometry bit stream and an attribute bit stream as one will be also referred to as a G-PCC bit stream.

<Structure of bit stream>

An example of a structure of such a G-PCC bit stream is illustrated in Fig. 1. In Fig. 1, each rectangular region represents one Type-length-value encapsulation structure (tlv_encapsulation()).

An SPS (Sequence Parameter Set) indicates a field where a sequence parameter set is stored. A GPS(s) (Geometry Parameter Set) indicates a region where a geometry parameter set is stored. An APS(s) (Attribute Parameter Set) indicates a field where an attribute parameter set is stored. The GPS and APS may be given for each slice. The GPS(s) and APS(s) are associated with the SPS using sps_id.

A geometry data unit indicates a field where geometry data of one slice is stored. A geometry data unit is associated with the GPS(s) using gps_id. An attribute data unit indicates a field where attribute data for one slice is stored. A plurality of attribute data units may be given for one geometry data unit. The attribute data unit(s) are associated with the APS(s) using aps_id.

The geometry data unit and the attribute data unit(s), which configure the same slice, are associated with each other by slice_id. The same point may belong to different slices. The slices are categorized into independent slices that do not have a dependency on other slices for decoding, and dependent slices that have the dependency.

<Combined frame>

Incidentally, a point cloud can change in the time direction like a moving image (also called dynamic). G-PCC can encode such a dynamic point cloud over a certain period of time. Such a point cloud is composed of a plurality of frames (also called point cloud frames) at different times, like a moving image. For example, for a geometry, the octree of each frame is encoded (for each frame).

NPL 4 discloses a method of encoding a plurality of frames together as one. Specifically, as illustrated in Fig. 2, an encoder generates one combined frame by combining octrees of a plurality of frames as sub-frames, encodes the combined frame like a normal frame, and sets the resulting combined frame as a sample. Thus, the point cloud of the combined frame is a combination of the point clouds of the respective sub-frames, and includes points of the sub-frames. In other words, the octree of the combined frame is a combination of the octrees of the respective sub-frames, and includes nodes of values of "1" of the octrees of the respective sub-frames.

In the example of Fig. 2, two frames (Frame 1 and Frame2) are combined, but any number of frames may be combined (included in one combined frame). Each of the frames in combination (Frame 1 and Frame2 in the example of Fig. 2) is also referred to as a sub-frame.

This way makes it possible to reduce the number of times that the decoder initialization is performed for each frame and thus to prevent an increase in the load of the decoding processing. For example, this is useful for decoding processing in a client device or the like with relatively low processing performance. There may be redundancy between the octrees of sub-frames. Especially, those in the upper layers are likely to have redundancy. Such redundancy of the octrees may reduce encoding efficiency. Combining sub-frames makes it possible to reduce such redundancy of the octrees and thus to prevent a reduction in encoding efficiency.

The sub-frames may be combined in any manner. For example, any number of sub-frames may be combined. The order of arranging the sub-frames to be combined does not have to be the order of displaying the sub-frames. For example, non-consecutive sub-frames may be combined. For 3D data, the length of the display period of a frame (sub-frame) during reproduction depends on the application and does not have to be constant (it may vary depending on the frame (sub-frame)).

<Reproduction of sub-frame>

A reproduction device divides such a combined frame into sub-frames and reproduces each sub-frame separately (reproduces each sub-frame as a normal frame). In other words, the reproduction device needs to know the order of reproducing the sub-frames. In regards to this, NPL 4 discloses a method of transmitting information indicating the order of displaying sub-frames (frame number attribute and frame index attribute).

The frame number attribute is a method of assigning a frame number indicating the display order in the entire sequence to each sub-frame as an attribute. In the example of Fig. 3, a frame number (FN#x (x is a natural number)) is assigned to an attribute data unit (ADU) of each slice (corresponding to a frame). The reproduction device decodes the combined frame and reproduces each sub-frame so that the images of the point clouds of the respective sub-frames are displayed in the order indicated by the frame numbers (i.e., displayed in the order of FN#0, FN#1, FN#2, FN#3, FN#4, FN#5, FN#6, FN#7, and so on).

As illustrated in Fig. 3, in the case of this frame number attribute, the order of sub-frames can be changed not only in the combined frame but also over combined frames. For example, in Fig. 3, the order of sub-frames FN#1 and FN#2 has been reversed, and the order of sub-frames FN#4 and FN#5 has been reversed. In other words, sub-frames FN#1 and FN#2 are combined in a different order from the display order to form a combined frame of sample a. Thus, their orders have been reversed in the combined frame.

Therefore, in the case of the frame number attribute, the reproduction device repeats the processing of decoding the sample to be processed according to the decoding time, displaying the sub-frame according to the frame number, and if the next sub-frame to be displayed is not present in the samples having been decoded, decoding the previous or next sample.

On the other hand, the order of sub-frames FN#4 and FN#5 has been reversed, so that the partner (sub-frame) to be combined with each of the sub-frames has been changed. For example, sub-frame FN#4 is combined with sub-frame FN#3 to form a combined frame of sample b. Sub-frame FN#5 is combined with sub-frames FN#6 and FN#7 to form a combined frame of sample c. In other words, the order has been reversed over the combined frames. Changing the sub-frame(s) to be combined in this way may make it possible to prevent a reduction in encoding efficiency.

The frame index attribute is a method of assigning a frame index indicating the display order in a combined frame to each sub-frame as an attribute. In the example of Fig. 4, a frame index (FI#x (x is a natural number)) is assigned to an attribute data unit (ADU) of each slice (corresponding to a frame). The reproduction device decodes the combined frame and reproduces each sub-frame so that the images of the point clouds of the respective sub-frames are displayed in the order indicated by the frame index.

As illustrated in Fig. 4, in the case of this frame index attribute, the order of sub-frames can be changed in a combined frame. For example, in Fig. 4, the order of sub-frames FI#1 and FI#2 has been reversed. In other words, sub-frames FN#1 and FN#2 are combined in a different order from the display order to form a combined frame of sample a. Thus, their orders have been reversed in the combined frame.

In this case, the reproduction device displays the sub-frames in the order of FN#0, FN#1, FN#2 of sample a, FN#0, FN#1 of sample b, FN#0, FN#1, FN#2 of sample c, and so on.

Therefore, in the case of the frame index attribute, the reproduction device repeats the processing of decoding the sample to be processed according to the decoding time, and appropriately rearranging and displaying the sub-frames in that sample according to the frame index.

<ISOBMFF>

In NPL 2, ISOBMFF (International Organization for Standardization Base Media File Format), which is a specification of a file container of an international standard technology of moving image compression of MPEG-4 (Moving Picture Experts Group-4), is disclosed.

<Storage of G-PCC bit stream in ISOBMFF>

In NPL 3, for the purpose of efficiency of reproduction processing and network distribution from a local storage of a bit stream encoded in this G-PCC, a method for storing a G-PCC bit stream in ISOBMFF is disclosed. This method is under standardization of MPEG-I Part 18 (ISO/IEC 23090-18). Hereinafter, a G-PCC bit stream stored in ISOBMFF will be referred to as a G-PCC file.

Fig. 5 illustrates an example of a G-PCC file structure. GPCCSampleEntry in TrackBox, which is a field for storing metadata in a G-PCC file includes GPCCDecoderConfigurationRecord. For example, a sequence parameter set (SPS) is stored in GPCCDecoderConfigurationRecord.

GPCCDecoderConfigurationRecord may further store a geometry parameter set (GPS), an attribute parameter set (APS), and a tile inventory, according to the sample entry type.

Each sample in MediaDataBox may store geometries and attributes corresponding to one point cloud frame. In addition, this sample can store a geometry parameter set, an attribute parameter set, and a tile inventory in accordance with a sample entry type.

For a G-PCC file, two methods are specified: a single track encapsulation method in which geometry and attribute(s), which are associated with each other, are stored in one track, and a multi-track method in which geometry and attribute(s), which are associated with each other, are stored in different tracks.

<SubSampleInformationBox>

A field for specific continuous bytes in a sample is also referred to as a subsample. The definition of this subsample is specified depending on the encoding codec. For example, in the case of HEVC (High Efficiency Video Coding), a NAL unit is a subsample. In the case of the method described in NPL 4, a combined frame is a sample, and each of the point cloud frames (sub-frames) that form the combined frame is a subsample. SubSampleInformationBox is set in a field for storing metadata of the G-PCC file, where information can be added for each subsample (to the subsample).

Fig. 6 illustrates an example of the syntax of SubSampleInformationBox. In the example of Fig. 6, for SubSampleInformationBox, sample_delta, subsample_count, subsample_size, codec_specific_parameters, and so on are defined. sample_delta is a parameter for specifying a sample having a subsample(s). subsample_count is a parameter that indicates the number of subsamples. subsample_size is a parameter that indicates the size of the subsample. codec_specific_parameters define additional subsample information that is determined depending on the codec.

Fig. 7 illustrates an example of the syntax of codec_specific_parameters. As illustrated in Fig. 7, for example, for a flag value of "0" (flag == 0), one subsample (G-PCC unit based subsamples. 1 subsample) includes one GPCC unit. In codec_specific_parameters, payloadType (e.g., geometry, attribute, etc.) of the GPCC unit is stored. For example, when the payload is attribute data (payloadType == 4), an attribute identifier, attrIdx, is stored.

For a flag value of "1" (flag == 1), one subsample (Tile based subsamples. 1 subsample) includes one or more consecutive GPCC units corresponding to one GPCC tile, or includes one or more consecutive GPCC units including a parameter set, a tile inventory, and a frame boundary marker. In codec_specific_parameters, when the subsample is a GPCC tile (tile_data == 1), the tile identifier, tile_id is stored.

<Display timing>

However, in the method described in NPL 4, the display timing of each sub-frame is not clearly stated as metadata in a G-PCC file. This makes it difficult for a decoder to grasp the display timing of each sub-frame before decoding the bit stream.

As described above, the display period for each point cloud frame can be defined as having any length. When the combined frame described in NPL 4 is applied, any number of sub-frames can be stored in one sample. Therefore, the length of the display period for each combined frame is not necessarily constant. Furthermore, since the order of the sub-frames can be changed to be combined as described above, the first sub-frame of a sample is not necessarily displayed first. In particular, in the case of the frame number attribute, since the order of sub-frames can be reversed over samples, before all sub-frames of a certain sample are displayed, sub-frames of the other samples may be displayed. As such, the display timing of each point cloud frame is uncertain.

The decoder needs to decode each sample in a bit stream before the first display timing of a sub-frame included in that sample. However, it is difficult for the decoder to obtain information indicating the display timing of each sub-frame from the G-PCC file, and as described above, the timing is uncertain. In other words, the decoder does not know at what timing (by when) to obtain and decode each sample. This could result in, for example, a delay in the reproduction processing, which may cause frame loss during display. It is also possible to consider a method in which all samples are decoded before reproduction begins, but in that case, there is a risk of an increased delay before display starts. In addition, it is also difficult for the decoder to determine whether or not the file can be reproduced before the decoder decodes the bit stream. Thus, there is a risk that the quality of the reproduction and display of 3D data may be reduced.

<3. Transmission of information on display timing>

<Method 1>

Therefore, as shown in the top row of a table in Fig. 8, information on the display timing of a sub-frame is stored as metadata of a file (Method 1).

For example, an information processing device (also referred to as a first information processing device) may include an extraction unit that extracts, based on first information on a display timing of a sub-frame stored as metadata in a file, a sample including the sub-frame from a bit stream stored in the file in time for the display timing of the sub-frame; a decoding unit that decodes the extracted sample; and a construction unit that constructs a point cloud for the sub-frame based on the first information in time for the display timing of the sub-frame included in the decoded sample. Further, an information processing method (also referred to as a first information processing method) may include: extracting, based on first information on a display timing of a sub-frame stored as metadata in a file, a sample including the sub-frame from a bit stream stored in the file in time for the display timing of the sub-frame; decoding the extracted sample; and constructing a point cloud for the sub-frame based on the first information in time for the display timing of the sub-frame included in the decoded sample.

Thus, the first information processing device can more easily grasp the display timing of each sub-frame. Therefore, the first information processing device can decode each sample in time for the display timing of each sub-frame. Therefore, the first information processing device can prevent a reduction in quality of reproduction and display of 3D data.

Further, for example, an information processing device (also referred to as a second information processing device) may include: an encoding unit that encodes as a sample a combined frame in which a plurality of frames are combined as sub-frames to generate encoded data; a bit stream generation unit that generates a bit stream including the encoded data and generates first information on display timings of the sub-frames based on the bit stream; and a file generation unit that generates a file for storing the bit stream and stores the first information as metadata in the file. Further, an information processing method (also referred to as a second information processing method) may include: encoding as a sample a combined frame in which a plurality of frames are combined as sub-frames to generate encoded data; generating a bit stream including the encoded data; generating first information on display timings of the sub-frames based on the bit stream; generating a file for storing the bit stream; and storing the first information as metadata in the file.

By the second information processing device performing the processing in this manner, the first information processing device can more easily grasp the display timing of each sub-frame. In other words, the second information processing device can cause the first information processing device to decode each sample in time for the display timing of each sub-frame. Therefore, the second information processing device can prevent a reduction in quality of the reproduction and display of 3D data by the first information processing device.

In the first information processing device and the second information processing device, the 3D data may be any data as long as it indicates the three-dimensional shape of an object in a three-dimensional space, and may be, for example, a point cloud. In that case, the sub-frame may be, for example, a point cloud frame. In the case of a combined frame, for example, a sample may correspond to the combined frame, and a subsample may correspond to the sub-frame. The method of encoding the 3D data (geometry) may be, for example, G-PCC. Accordingly, the bit stream may be, for example, a G-PCC bit stream, and the file may be, for example, a G-PCC file.

Information on the display timing of a sub-frame may be stored, for example, in a meta information storage area of the file. For example, the file may be ISOBMFF, and the first information may be stored in the corresponding SubSampleInformationBox. For example, codec_specific_parameters of SubSampleInformationBox may be extended to store the first information.

The file may be ISOBMFF, and the first information may be stored in the corresponding SampleGroupBox. SampleGroupBox is a field for storing information assigned to a sample group made up of a plurality of samples. Accordingly, in this case, the first information (information on display timing) for subsamples (sub-frames) in each sample constituting a sample group is stored in SampleGroupBox. For example, the first information may be stored in SubFrameTimingGroupEntry of VolumetricVisualSampleGroupEntry. In other words, the first information may be assigned to each sample group.

<Method 1-1>

As shown in the second row from the top of the table in Fig. 8, the information (first information) on the display timing of a sub-frame may include an offset from the display timing of a sample (Method 1-1).

Fig. 9 illustrates an example of the syntax of codec_specific_parameters of SubSampleInformationBox in this case. In the example of Fig. 9, for a flag value of "2" (flag == 2), subsample_delta is stored. subsample_delta is a parameter indicating the difference between the decoding time of the sample to which the subsample (i.e., the sub-frame) belongs and the decoding time of the subsample. In G-PCC, the decoding time and the display time (presentation time) are equivalent. In other words, subsample_delta indicates an offset from the sample display timing.

The first information may include a sign (positive or negative). In the example of Fig. 9, for a flag value of "2" (flag == 2), a sign is stored together with subsample_delta. In this case, subsample_delta indicates the absolute value of the difference between the decoding timing of the sample to which the subsample belongs and the decoding timing of the subsample. The sign is a parameter indicating the sign (positive or negative) of the corresponding subsample_delta. For example, the sign may have a value of 0 to indicate positive and a value of 1 to indicate negative. Instead of storing the sign, subsample_delta may have a negative value as well as 0 or a positive value. In that case, the sign may be eliminated.

subsample_delta may be subframe_time_offset, which is a parameter indicating the difference between the decoding timing of the sample to which the sub-frame belongs and the decoding timing of the sub-frame. In this case, a sign may also be transmitted, and subframe_time_offset may have a negative value as well as 0 or a positive value. In other words, subframe_time_offset may be equivalent to subsample_delta, or may be equivalent to subsample_delta and a sign.

subframe_time_offset (or the combination of subframe_time_offset and a sign) having a negative value makes it possible to display the sub-frame to be processed before the display timing of the sample to which the sub-frame belongs. In other words, it is possible to change the order of sub-frames over samples.

The first information processing device acquires a sample decoding timing DT[n] and the first information from the G-PCC file, and derives a display timing of each sub-frame by adding the first information to the sample decoding timing DT[n]. Fig. 10 illustrates an example of that derivation. In the example of Fig. 10, the sample decoding timings DT[n] of sample a, sample b, and sample c are 0, 3, and 5, respectively. Here, it is assumed that subsample_delta (subframe_time_offset) can have a negative value. As illustrated in Fig. 10, subsample_delta of the subsample assigned frame number FN#0 is 0. subsample_delta of the subsample assigned frame number FN#1 is 1. subsample_delta of the subsample assigned frame number FN#2 is 2. subsample_delta of the subsample assigned frame number FN#3 is 0. subsample_delta of the subsample assigned frame number FN#4 is -1. subsample_delta of the subsample assigned frame number FN#5 is 2. subsample_delta of the subsample assigned frame number FN#6 is 1. subsample_delta of the subsample assigned frame number FN#7 is 2.

For example, the first information processing device derives the display timing of a sub-frame (the decoding timing of a sub-frame) according to the following Equation (1).

$$\text{subsample decoding time (= presentation time)} = \text{DT(n)} + \text{subsample\_delta} \quad \dots \quad (1)$$

Accordingly, the display timing (subsample decoding time) of the subsample assigned frame number FN#0 is DT(n) + subsample_delta = 0 + 0 = 0. The display timing (subsample decoding time) of the subsample assigned frame number FN#1 is DT(n) + subsample_delta = 0 + 1 = 1. The display timing (subsample decoding time) of the subsample assigned frame number FN#2 is DT(n) + subsample_delta = 0 + 2 = 2. The display timing (subsample decoding time) of the subsample assigned frame number FN#3 is DT(n) + subsample_delta = 3 + 0 = 3. The display timing (subsample decoding time) of the subsample assigned with frame number FN#4 is DT(n) + subsample_delta = 5 - 1 = 4. The display timing (subsample decoding time) of the subsample assigned frame number FN#5 is DT(n) + subsample_delta = 3 + 2 = 5. The display timing (subsample decoding time) of the subsample assigned frame number FN#6 is DT(n) + subsample_delta = 5 + 1 = 6. The display timing (subsample decoding time) of the subsample assigned frame number FN#7 is DT(n) + subsample_delta = 5 + 2 = 7.

The first information processing device displays each subsample according to the display timing of the subsample derived in this manner. Thus, the first information processing device can present each sub-frame at the specified timing. Specifically, the first information processing device acquires and decodes, based on first information on a display timing of each sub-frame stored as metadata in a G-PCC file, each sample in time for the display timing of the sub-frame, and constructs a point cloud for each sub-frame. This makes it possible to suppress the occurrence of reproduction delays and frame loss and thus to prevent a reduction in quality of the reproduction and display of 3D data.

In other words, the second information processing device stores the first information on the display timing of each sub-frame as metadata in the G-PCC file, thereby enabling the first information processing device to suppress the occurrence of reproduction delays and frame loss, and thus to prevent a reduction in quality of the reproduction and display of 3D data.

In addition to the first information, second information on the display order of each sub-frame may be further stored in the file as metadata. Thus, the first information processing device can easily grasp the display order of each sub-frame by simply referring to the second information without performing the above-described calculation. This second information may include a frame number indicating the display order in the entire sequence, or a frame index indicating the display order in the sample.

<Method 1-2>

As shown in the bottom row of the table in Fig. 8, information (first information) on the display timing of a sub-frame may include second information indicating the display order of the sub-frame and a duration indicating the length of the display period of the sub-frame (Method 1-2). The second information may, for example, include a frame number indicating the display order of the sub-frame in the entire sequence.

Fig. 11 illustrates an example of the syntax of codec _specific_parameters of SubSampleInformationBox in this case. In the example of Fig. 11, for a flag value of "2" (flag == 2), the frame number and the duration are stored. The frame number is as described with reference to Fig. 3. The duration indicates the length of the display period of the sub-frame.

The first information processing device acquires the frame number and the duration of each sub-frame from the G-PCC file, and displays each subsample (sub-frame) in order according to the frame number, for the display period indicated by the duration. Fig. 12 illustrates an example of that state. In the example of Figure 12, the display period of each sub-frame is "1", so that the display timing of the subsample assigned frame number FN#0 to the subsample assigned frame number FN#7 are 0 to 7, respectively.

Thus, the first information processing device can display each sub-frame at the specified timing. Specifically, the first information processing device acquires and decodes, based on first information on a display timing of each sub-frame stored as metadata in a G-PCC file, each sample in time for the display timing of the sub-frame, and constructs a point cloud for each sub-frame. This makes it possible to suppress the occurrence of reproduction delays and frame loss and thus to prevent a reduction in quality of the reproduction and display of 3D data.

In other words, the second information processing device stores the first information on the display timing of each sub-frame as metadata in the G-PCC file, thereby enabling the first information processing device to suppress the occurrence of reproduction delays and frame loss, and thus to prevent a reduction in quality of the reproduction and display of 3D data.

The second information may include, for example, a frame index indicating the display order of the sub-frame in the sample.

<Other methods>

The first information may be information that directly indicates the display timing of each sub-frame. The first information may include only the sub-frame display order, without including information indicating an offset from the sample display timing or the length of the display period of the sub-frame.

A case has been described above in which a file is configured by a single track in which geometry and attribute(s), which are associated with each other, are stored in one track. However, the present technology can also be applied to a case where a file is configured by multiple tracks in which ISOBMFF stores geometry and attribute(s), which are associated with each other, in different tracks. In that case, the first information may be stored only in an attribute track in which, for example, a frame number attribute or a frame index attribute is stored (the first information may not be stored in a geometry track). The first information may be stored only in a geometry track in which geometry is stored (the first information may not be stored in an attribute track in which attribute(s) are stored). The first information may be stored in both the geometry track and the attribute track (the same information may be stored in the geometry track and the attribute track).

In the description presented above, although an example has been described in which ISOBMFF is applied as a file format, a G-PCC bit stream may be stored in any type of file, which may be a format other than ISOBMFF. For example, a G-PCC bit stream may be configured to be stored in a Matroska media container. A main configuration example of the Matroska media container is illustrated in Fig. 13.

In this case, for example, the first information on the display timing of each sub-frame may be stored as newly-defined elements under a Track Entry element.

In this case as well, the first information on the display timing of each sub-frame is stored in a system layer of the Matroska media container. Therefore, the first information processing device can easily obtain the first information by referring to the system layer (without parsing the G-PCC bit stream). Accordingly, the first information processing device can easily grasp the display timing of each sub-frame by referring to the system layer of the Matroska media container. Therefore, the first information processing device acquires and decodes, based on the first information, each sample in time for the display timing of the sub-frame, and constructs a point cloud for each sub-frame. This makes it possible to suppress the occurrence of reproduction delays and frame loss and thus to prevent a reduction in quality of the reproduction and display of 3D data.

In other words, the second information processing device stores the first information on the display timing of each sub-frame as metadata in the G-PCC file, thereby enabling the first information processing device to suppress the occurrence of reproduction delays and frame loss, and thus to prevent a reduction in quality of the reproduction and display of 3D data.

<4. First embodiment>

<File generation device>

The present technology described above can be applied to any device. Fig. 14 is a block diagram illustrating an example of the configuration of a file generation device that is one type of information processing device to which the present technology is applied. The file generation device 300 illustrated in Fig. 14 is a device that encodes point cloud data by applying a G-PCC and stores a G-PCC bit stream generated in accordance with the encoding in ISOBMFF (a G-PCC file).

In this case, by applying the above-described technology, the file generation device 300 encodes as a sample a combined frame in which a plurality of frames are combined as sub-frames to generate encoded data; generating a bit stream including the encoded data; generates first information on display timings the sub-frames based on the bit stream; generates a file for storing the bit stream; and stores the first information as metadata in the file.

In Fig. 14, main components such as processing units or data flow are illustrated, and the components illustrated in Fig. 14 are not necessarily all. In other words, in the file generation device 300, processing units not illustrated in Fig. 14 as blocks may be present, and processing and data flows not illustrated in Fig. 14 using arrows and the like may be present.

As illustrated in Fig. 14, the file generation device 300 includes a combined frame generation unit 311, an extraction unit 312, an encoding unit 313, a bit stream generation unit 314, and a file generation unit 315, and a file generation unit 315. The encoding unit 313 includes a geometry encoding unit 321, an attribute encoding unit 322, and a metadata generation unit 323.

The combined frame generation unit 311 combines a plurality of frames of a point cloud input to the file generation device 300 as sub-frames to generate a combined frame. The combined frame generation unit 311 supplies the point cloud including the combined frame to the extraction unit 312.

The extraction unit 312 extracts geometry and attribute(s) from the point cloud supplied from the combined frame generation unit 311. The extraction unit 312 supplies data of the extracted geometry to the geometry encoding unit 321 of the encoding unit 313. The extraction unit 312 supplies the extracted attribute(s) to the attribute encoding unit 322 of the encoding unit 313.

The encoding unit 313 encodes data of a point cloud. The geometry encoding unit 321 encodes the geometry supplied from the extraction unit 312 to generate a geometry bit stream. The geometry encoding unit 321 supplies the generated geometry bit stream to the metadata generation unit 323. The geometry encoding unit 321 also supplies the generated geometry bit stream to the attribute encoding unit 322. The attribute encoding unit 322 encodes the attribute(s) supplied from the extraction unit 312 to generate an attribute bit stream. The attribute encoding unit 322 supplies the generated attribute bit stream to the metadata generation unit 323. The metadata generation unit 323 generates metadata to be stored in a G-PCC bit stream by referring to the supplied geometry bit stream and attribute bit stream. The metadata generation unit 323 supplies the generated metadata to the bit stream generation unit 314 together with the geometry bit stream and the attribute bit stream. At this time, by applying the present technology described above in <3. Transmission of information on display timing>, the encoding unit 313 encodes as a sample the combined frame, in which a plurality of frames are combined as sub-frames, to generate encoded data.

The bit stream generation unit 314 multiplexes the supplied geometry bit stream, attribute bit stream, and metadata to generate a G-PCC bit stream. In other words, the bit stream generation unit 314 generates a bit stream (G-PCC bit stream) including encoded data (the geometry bit stream, attribute bit stream, and metadata). At this time, by applying the present technology described above in <3. Transmission of Information on display timing>, the bit stream generation unit 314 generates first information on the display timing of each sub-frame based on the bit stream.

For example, this first information may include subframe_time_offset indicating an offset from the display timing of the sample. subframe_time_offset may include a sign. The first information may include second information indicating the display order of each sub-frame and a duration indicating the length of the display period of the sub-frame. The second information may include a frame number indicating the display order in the entire sequence. The second information may include a frame index indicating the display order in the sample. The bit stream generation unit 314 supplies the generated G-PCC bit stream and first information to the file generation unit 315.

By applying the present technology described above in <3. Transmission of information on display timing>, the file generation unit 315 generates a G-PCC file (also referred to as a file or a content file) for storing the supplied G-PCC bit stream and metadata (first information). At this time, the file generation unit 315 may further store second information on the display order of each sub-frame as metadata in the file. For example, the second information may include a frame number indicating the display order in the entire sequence. The second information may include a frame index indicating the display order in the sample. The file generation unit 315 outputs the G-PCC file thus generated to the outside of the file generation device 300.

With this configuration, the file generation device 300 can obtain the same effect as in the case of <3. Transmission of information on display timing>. Accordingly, the file generation device 300 can prevent a reduction in quality of the reproduction and display of 3D data.

<Flow of file generation processing>

An example of the flow of file generation processing performed by this file generation device 300 will be described with reference to a flowchart illustrated in Fig. 15.

When the file generation processing is started, in step S301, the combined frame generation unit 311 of the file generation device 300 combines a plurality of frames as sub-frames for a point cloud to be encoded to generate a combined frame.

In step S302, the extraction unit 312 extracts geometry and attribute(s) from the point cloud.

In step S303, the encoding unit 313 encodes the geometry and attribute(s) extracted in step S302 to generate a geometry bit stream and an attribute bit stream. The encoding unit 313 further generates metadata thereof. At this time, by applying the present technology described above in <3. Transmission of information on display timing>, the encoding unit 313 encodes as a sample the combined frame, in which a plurality of frames are combined as sub-frames, to generate encoded data.

In Step S304, the bit stream generation unit 314 multiplexes the geometry bit stream, attribute bit stream, and metadata generated in step S303 to generate a G-PCC bit stream. By applying the present technology described above in <3. Transmission of information on display timing>, the bit stream generation unit 314 further generates first information on the display timing of each sub-frame based on the G-PCC bit stream.

For example, this first information may include subframe_time_offset indicating an offset from the display timing of the sample. subframe_time_offset may include a sign. The first information may include second information indicating the display order of each sub-frame and a duration indicating the length of the display period of the sub-frame. The second information may include a frame number indicating the display order in the entire sequence. The second information may include a frame index indicating the display order in the sample.

In step S305, by applying the present technology described above in <3. Transmission of information on display timing>, the file generation unit 315 generates a G-PCC file (i.e., a content file) for storing the G-PCC bit stream generated in step S304. Then, by applying the present technology described above in <3. Transmission of information on display timing>, the file generation unit 315 stores the first information as metadata in the G-PCC file (in the meta information storage area). At this time, the file generation unit 315 may further store second information on the display order of each sub-frame as metadata in the file. For example, the second information may include a frame number indicating the display order in the entire sequence. The second information may include a frame index indicating the display order in the sample.

In step S306, the file generation unit 315 outputs the G-PCC file (i.e., the content file) generated in step S305 to the outside of the file generation device 300.

When the processing of step S306 ends, the file generation processing ends.

As described above, by applying the present technology to the file generation processing, the file generation device 300 generates metadata including spatial configuration information of a subgroup and dependency information between the subgroup and a layer group, and stores the metadata in the system layer of the G-PCC file. Thus, the file generation device 300 can obtain the same effect as in the case of <3. Transmission of information on display timing>. Accordingly, the file generation device 300 can prevent a reduction in quality of the reproduction and display of 3D data.

<Reproduction device>

Fig. 16 is a block diagram illustrating an example of a configuration of a reproduction device that is one aspect of an information processing device to which the present technology is applied. The reproduction device 400 illustrated in Fig. 16 is a device that decodes a G-PCC bit stream stored in ISOBMFF (a G-PCC file), reconfigure a point cloud, and performs rendering to generate presentation information.

By applying the present technology described above in <3. Transmission of information on display timing>, the reproduction device 400 extracts the G-PCC bit stream of the point cloud from the G-PCC file, and decodes the extracted G-PCC bit stream to construct a point cloud.

Fig. 16 shows principal components such as processing units and data flows, and Fig. 16 does not show all components. That is, processing units that are not illustrated in Fig. 16 as blocks and processing and data flows that are not illustrated in Fig. 16 as arrows and the like may be present in the reproduction device 400.

As illustrated in Fig. 16, the reproduction device 400 includes a file processing unit 411, a decoding unit 412, and a presentation information generation unit 413.

The file processing unit 411 acquires a G-PCC file input to the reproduction device 400, and performs processing for the G-PCC file. For example, the file processing unit 411 includes an extraction unit 421. The extraction unit 421 extracts a G-PCC bit stream from the supplied G-PCC file. At this time, by applying the present technology described above in <3. Transmission of information on display timing>, the extraction unit 421 extracts, based on first information on the display timing of a sub-frame stored as metadata in the G-PCC file, a sample including the sub-frame is extracted from the G-PCC bit stream stored in the G-PCC file at a timing that is in time for the display timing of the sub-frame. The extraction unit 421 supplies the extracted sample and the first information to the decoding unit 412.

For example, this first information may include subframe_time_offset indicating an offset from the display timing of the sample. subframe_time_offset may include a sign. This G-PCC file may further store second information on the display order of each sub-frame as metadata. The extraction unit 421 may extract a sample according to the display order of each sub-frame indicated in the second information. This second information may include a frame number indicating the display order in the entire sequence. The second information may include a frame index indicating the display order in the sample. The first information may include second information indicating the display order of each sub-frame and a duration indicating the length of the display period of the sub-frame. The second information may include a frame number indicating the display order in the entire sequence. The second information may include a frame index indicating the display order in the sample.

By applying the present technology described above in <3. Transmission of information on display timing>, the decoding unit 412 decodes the sample (the G-PCC bit stream). The decoding unit 412 supplies the resulting sample and the first information to (the point cloud construction unit 441 of) the presentation information generation unit 413. For example, the decoding unit 412 includes a geometry decoding unit 431 and an attribute decoding unit 432. The geometry decoding unit 431 decodes the geometry bit stream included in the sample supplied from the extraction unit 421 to obtain the geometry of the sample. The geometry decoding unit 431 supplies the geometry of the sample to the attribute decoding unit 432. The geometry decoding unit 431 also supplies the geometry of the sample and the first information to the presentation information generation unit 413 (the point cloud construction unit 441). The attribute decoding unit 432 further decodes the bit stream of the attribute included in the sample supplied from the extraction unit 421 by using the geometry supplied from the geometry decoding unit 431, to obtain the attribute(s) of the sample. The attribute decoding unit 432 supplies the attribute(s) of the sample to the presentation information generation unit 413 (the point cloud construction unit 441).

The presentation information generation unit 413 constructs a point cloud by using the supplied sample (geometry and attribute(s)), and generates presentation information that is information for presenting (e.g., displaying) the point cloud. The presentation information generation unit 413 includes a point cloud construction unit 441 and a presentation processing unit 442.

By applying the present technology described above in <3. Transmission of information on display timing>, the point cloud construction unit 441 constructs, based on the first information supplied from the decoding unit 412, a point cloud for the sub-frames included in the sample supplied from the decoding unit 412 at a timing that is in time for the display timing of each sub-frame. The point cloud construction unit 441 supplies the constructed point cloud to the presentation processing unit 442.

The presentation processing unit 442 generates presentation information by using the supplied point cloud. The presentation processing unit 442 outputs the generated presentation information to the outside of the reproduction device 400. For example, the presentation information is displayed on a monitor.

With this configuration, the reproduction device 400 can obtain the same effect as in the case of <3. Transmission of information on display timing>. Accordingly, the reproduction device 400 can prevent a reduction in quality of the reproduction and display of 3D data.

<Flow of reproduction processing>

An example of reproduction processing performed by this reproduction device 400 will be describe with reference to a flowchart illustrated in Fig. 17.

When the reproduction processing is started, in step S401, by applying the present technology described above in <3. Transmission of information on display timing>, (the extraction unit 421 of) the file processing unit 411 of the reproduction device 400 acquires information on display timing from the track to be reproduced in a G-PCC file (i.e., a content file).

In step S402, by applying the present technology described above in <3. Transmission of information on display timing>, the extraction unit 421 of the file processing unit 411 extracts, based on first information on the display timing of a sub-frame stored as metadata in the G-PCC file, a sample including the sub-frame is extracted from the G-PCC bit stream stored in the G-PCC file at a timing that is in time for the display timing of the sub-frame.

For example, this first information may include subframe_time_offset indicating an offset from the display timing of the sample. subframe_time_offset may include a sign. This G-PCC file may further store second information on the display order of each sub-frame as metadata. The extraction unit 421 may extract a sample according to the display order of each sub-frame indicated in the second information. This second information may include a frame number indicating the display order in the entire sequence. The second information may include a frame index indicating the display order in the sample. The first information may include second information indicating the display order of each sub-frame and a duration indicating the length of the display period of the sub-frame. The second information may include a frame number indicating the display order in the entire sequence. The second information may include a frame index indicating the display order in the sample.

In step S403, by applying the present technology described above in <3. Transmission of Information on display timing>, the decoding unit 422 decodes the sample extracted in step S402. In step S404, the decoding unit 422 further extracts subsamples from the decoded sample.

In step S405, by applying the present technology described above in <3. Transmission of Information on display timing>, the point cloud construction unit 441 constructs, based on the first information, a point cloud for the sub-frames included in the sample decoded in step S403 at a timing that is in time for the display timing of each sub-frame.

In Step S406, the presentation processing unit 442 performs rendering and the like using the point cloud constructed in Step S405 to generate presentation information. In step S407, the presentation processing unit 442 supplies the presentation information to the outside of the reproduction device 400 for presentation.

When the processing of step S407 ends, the reproduction processing ends.

By executing the processing as described above, the reproduction device 400 can obtain the same effect as in the case of <3. Transmission of information on display timing>. Accordingly, the reproduction device 400 can prevent a reduction in quality of the reproduction and display of 3D data.

<5. Supplement>

<Computer>

The above-described series of processing can be executed by hardware or software. When the series of processing is executed by software, a program that constitutes the software is installed on a computer. Here, the computer includes, for example, a computer built in dedicated hardware and a general-purpose personal computer on which various programs are installed to be able to execute various functions.

Fig. 18 is a block diagram illustrating a configuration example of computer hardware that executes the above-described series of processing using a program.

In a computer 900 illustrated in Fig. 18, a central processing unit (CPU) 901, a read only memory (ROM) 902, and a random access memory (RAM) 903 are connected to one another via a bus 904.

An input/output interface 910 is also connected to the bus 904. An input unit 911, an output unit 912, a storage unit 913, a communication unit 914, and a drive 915 are connected to the input/output interface 910.

The input unit 911 is, for example, a keyboard, a mouse, a microphone, a touch panel, or an input terminal. The output unit 912 is, for example, a display, a speaker, or an output terminal. The storage unit 913 includes, for example, a hard disk, a RAM disk, and non-volatile memory. The communication unit 914 includes, for example, a network interface. The drive 915 drives a removable medium 921 such as a magnetic disk, an optical disc, a magneto-optical disk, or a semiconductor memory.

In the computer configured as described above, the CPU 901 loads a program stored in the storage unit 913 into the RAM 903 via the input/output interface 910 and the bus 904 and executes the program, so that the series of processing is performed. Data and the like necessary for the CPU 901 to execute the various kinds of processing is also stored as appropriate in the RAM 903.

The program executed by the computer can be recorded in, for example, the removable medium 921 as a package medium or the like and provided in such a form. In such a case, the program can be installed in the storage unit 913 via the input/output interface 910 by inserting the removable medium 921 into the drive 915.

This program can also be provided via wired or wireless transfer medium such as a local area network, the Internet, and digital satellite broadcasting. In such a case, the program can be received by the communication unit 914 and installed in the storage unit 913.

In addition, this program can be installed in advance in the ROM 902, the storage unit 913, or the like.

<Applicable target of present technology>

In the description presented above, although a case has been described in which the present technology is applied mainly to a method in which a G-PCC bit stream is stored in ISOBMFF, the present technology can be applied to any target, which is not limited to the examples described above. In other words, a file for storing a G-PCC bit stream may be use any format, which is not limited to ISOBMFF and the Matroska media container described above. In addition, any encoding/decoding system may be used for 3D data (a point cloud), which is not limited to the G-PCC. Any format may be used for 3D data, which is a format other than the point cloud. In other words, some or all of specifications such as files, an encoding/decoding system, 3D data and generation/construction methods thereof, and the like may be different from those of the example described above as long as they are not contradictory to the features of the present technology described above. Some of the processing and the specifications described above may be omitted.

The present technology can be applied in any desired configuration. For example, the present technology can be applied in a variety of electronic devices.

For example, the present technology can be implemented as a configuration of a part of a device such as a processor (e.g., a video processor) of a system large scale integration (LSI) circuit, a module (e.g., a video module) using a plurality of processors or the like, a unit (e.g., a video unit) using a plurality of modules or the like, or a set (e.g., a video set) with other functions added to the unit.

For example, the present technology can also be applied to a network system configured with a plurality of devices. The present technology may be implemented as, for example, cloud computing for processing shared among a plurality of devices via a network. For example, the present technology may be implemented in a cloud service that provides services regarding images (moving images) to any terminals such as a computer, an audio visual (AV) device, a mobile information processing terminal, and an Internet-of-Things (IoT) device or the like.

In the present specification, a system means a set of a plurality of constituent elements (devices, modules (parts), or the like) and all the constituent elements may not be in the same casing. Accordingly, a plurality of devices accommodated in separate casings and connected via a network and a single device accommodating a plurality of modules in a single casing are all a system.

<Fields and applications to which present technology is applicable>

A system, device, a processing unit, and the like to which the present technology is applied can be used in any field such as traffic, medical treatment, security, agriculture, livestock industries, a mining industry, beauty, factories, home appliance, weather, and natural surveillance, for example. Any purpose can be set.

For example, the present technology can be applied to systems and devices for providing ornamental content and the like. For example, the present technology can be applied to systems and devices available for traffic, such as traffic condition monitoring and autonomous driving control. Further, for example, the present technology can be applied to systems and devices available for security. For example, the present technology can be applied to systems and devices available for automatic control of machines and the like. Further, for example, the present technology can be applied to systems and devices available for agriculture and livestock industry. The present technology can also be applied, for example, to systems and devices for monitoring natural conditions such as volcanoes, forests, and oceans and wildlife. Further, for example, the present technology can be applied to systems and devices available for sports.

<Others>

"Flag" as used herein is information for identifying a plurality of states and includes not only information used to identify two states of true (1) or false (0) but also information that allows identification of three or more states.

Therefore, a value that can be indicated by "flag" may be, for example, a binary value of 1 or 0 or may be ternary or larger. In other words, the number of bits constituting "flag" may be any number, e.g., 1 bit or a plurality of bits. It is also assumed that the identification information (also including a flag) is included in a bit stream or the difference information of identification information with respect to certain reference information is included in a bit stream. Thus, "flag" and "identification information" herein include not only the information but also the difference information with respect to the reference information.

Further, various types of information (metadata, or the like) regarding the coded data (bit stream) may be transmitted or recorded in any form as long as the information is associated with the coded data. Here, the term "associate" means, for example, making it possible to use (link) one piece of data when processing the other data. In other words, data associated with each other may be collected as one piece of data or may be individual pieces of data. For example, information associated with coded data (image) may be transmitted on a transmission path separate from that for the coded data (image). For example, the information associated with the coded data (image) may be recorded on a recording medium (or a recording area of the same recording medium) separate from that for the coded data (image). This "association" may be a part of the data instead of the entire data. For example, an image and information corresponding to the image may be associated with a plurality of frames, one frame, or any unit such as a part in the frame.

As used herein, terms such as "synthesize", "multiplex", "add", "integrate", "include", "store", "put in", "enclose", and "insert" may mean, for example, combining a plurality of objects into one, such as combining coded data and metadata into one piece of data, and means one method of "associating" described above.

Embodiments of the present technology are not limited to the above-described embodiments and can be changed variously within the scope of the present technology without departing from the spirit and scope of the present technology.

For example, a configuration described as one device (or processing unit) may be split into and configured as a plurality of devices (or processing units). Conversely, configurations described above as a plurality of devices (or processing units) may be integrated and configured as one device (or processing unit). It is a matter of course that configurations other than the aforementioned configurations may be added to the configuration of each device (or each processing unit). Moreover, some of configurations of a certain device (or processing unit) may be included in a configuration of another device (or another processing unit) as long as the configurations and operations of the overall system are substantially identical to one another.

For example, the aforementioned program may be executed by any device. In this case, the device only needs to have necessary functions (such as functional blocks) to obtain necessary information.

For example, each step of one flowchart may be executed by one device, or may be shared and executed by a plurality of devices. Further, when a plurality of processing are included in one step, one device may execute the plurality of processing, or the plurality of devices may share and execute the plurality of processing. In other words, it is also possible to execute the plurality of processing included in one step as processing of a plurality of steps. On the other hand, it is also possible to execute processing described as a plurality of steps collectively as one step.

For example, in a program that is executed by a computer, processing of steps describing the program may be executed in time series in an order described in the present specification, or may be executed in parallel or individually at a required timing such as when call is made. That is, the processing of the respective steps may be executed in an order different from the above-described order as long as there is no contradiction. Further, the processing of the steps describing this program may be executed in parallel with processing of another program, or may be executed in combination with the processing of the other program.

For example, a plurality of technologies regarding the present technology can be independently implemented as a single body as long as there is no contradiction. Of course, it is also possible to perform any plurality of the present technologies in combination. For example, it is also possible to implement some or all of the present technologies described in any of the embodiments in combination with some or all of the technologies described in other embodiments. It is also possible to implement some or all of any of the above-described technologies in combination with other technologies not described above.

The present technology can also be configured as follows.

(1) An information processing device including:

an extraction unit that extracts, based on first information on a display timing of a sub-frame stored as metadata in a file, a sample including the sub-frame from a bit stream stored in the file in time for the display timing of the sub-frame;
a decoding unit that decodes the extracted sample; and
a construction unit that constructs a point cloud for the sub-frame based on the first information in time for the display timing of the sub-frame included in the decoded sample.

(2) The information processing device according to (1), wherein the first information includes subframe_time_offset indicating an offset from a display timing of the sample.
(3) The information processing device according to (2), wherein subframe_time_offset includes a sign.
(4) The information processing device according to (2) or (3), wherein

the file further stores, as the metadata, second information on a display order of
the sub-frame, and
the extraction unit extracts the sample according to the display order of the sub-frame indicated in the second information.

(5) The information processing device according to (4), wherein the second information includes a frame number indicating a display order in entire sequence.
(6) The information processing device according to (4), wherein the second information includes a frame index indicating a display order in the sample.
(7) The information processing device according to any one of (1) to (6), wherein the first information includes second information indicating a display order of the sub-frame and a duration indicating a length of a display period of the sub-frame.
(8) The information processing device according to (7), wherein the second information includes a frame number indicating a display order in entire sequence.
(9) The information processing device according to (7), wherein the second information includes a frame index indicating a display order in the sample.
(10) The information processing device according to any one of (1) to (9), wherein the file is International Organization for Standardization Base Media File Format (ISOBMFF), and the first information is stored in

SubSampleInformationBox.

(11) The information processing device according to any one of (1) to (9), wherein the file is International Organization for Standardization Base Media File Format (ISOBMFF), and the first information is stored in SampleGroupBox.

(12) An information processing method including:

extracting, based on first information on a display timing of a sub-frame stored as metadata in a file, a sample including the sub-frame from a bit stream stored in the file in time for the display timing of the sub-frame;

decoding the extracted sample; and

constructing a point cloud for the sub-frame based on the first information in time for the display timing of the sub-frame included in the decoded sample.

(21) An information processing device including:

an encoding unit that encodes as a sample a combined frame in which a plurality of frames are combined as sub-frames to generate encoded data;

a bit stream generation unit that generates a bit stream including the encoded data and generates first information on display timings of the sub-frames based on the bit stream; and

a file generation unit that generates a file for storing the bit stream and stores the first information as metadata in the file.

(22) The information processing device according to (21), wherein the first information includes subframe_time_offset indicating an offset from a display timing of the sample.

(23) The information processing device according to (22), wherein subframe_time_offset includes a sign.

(24) The information processing device according to (22) or (23), wherein the file generation unit further stores, as the metadata, second information on display orders of the sub-frames in the file.

(25) The information processing device according to (24), wherein the second information includes a frame number indicating a display order in entire sequence.

(26) The information processing device according to (24), wherein the second information includes a frame index indicating a display order in the sample.

(27) The information processing device according to any one of (21) to (26), wherein the first information includes second information indicating display orders of the sub-frames and a duration indicating a length of a display period of each sub-frame.

(28) The information processing device according to (27), wherein the second information includes a frame number indicating display orders in entire sequence.

(29) The information processing device according to (27), wherein the second information includes a frame index indicating a display order in the sample.

(30) The information processing device according to any one of (21) to (29), wherein the file generation unit is International Organization for Standardization Base Media File Format (ISOBMFF), and the first information is stored in SubSampleInformationBox of the file.

(31) The information processing device according to any one of (21) to (29), wherein the file generation unit is International Organization for Standardization Base Media File Format (ISOBMFF), and the first information is stored in SampleGroupBox of the file.

(32) An information processing method including:

encoding as a sample a combined frame in which a plurality of frames are combined as sub-frames to generate encoded data;

generating a bit stream including the encoded data;

generating first information on display timings of the sub-frames based on the bit stream;

generating a file for storing the bit stream; and

storing the first information as metadata in the file.

[Reference Signs List]

300 File generation device

311 Combined frame generation unit

312 Extraction unit
313 Encoding unit
314 Bit stream generation unit
315 File generation unit
321 Geometry encoding unit
322 Attribute encoding unit
323 Metadata generation unit
400 Reproduction device
411 File processing unit
412 Decoding unit
413 Presentation information generation unit
421 Extraction unit
431 Geometry decoding unit
432 Attribute decoding unit
441 Point cloud construction unit
442 Presentation processing unit
900 Computer

**Claims**

1. An information processing device comprising:

   an extraction unit that extracts, based on first information on a display timing of a sub-frame stored as metadata in a file, a sample including the sub-frame from a bit stream stored in the file in time for the display timing of the sub-frame;
   a decoding unit that decodes the extracted sample; and
   a construction unit that constructs a point cloud for the sub-frame based on the first information in time for the display timing of the sub-frame included in the decoded sample.

2. The information processing device according to claim 1, wherein the first information includes subframe_time_offset indicating an offset from a display timing of the sample.

3. The information processing device according to claim 2, wherein subframe_time_offset includes a sign.

4. The information processing device according to claim 2, wherein

   the file further stores, as the metadata, second information on a display order of the sub-frame, and
   the extraction unit extracts the sample according to the display order of the sub-frame indicated in the second information.

5. The information processing device according to claim 1, wherein the first information includes second information indicating a display order of the sub-frame and a duration indicating a length of a display period of the sub-frame.

6. The information processing device according to claim 5, wherein the second information includes a frame number indicating a display order in entire sequence.

7. The information processing device according to claim 5, wherein the second information includes a frame index indicating a display order in the sample.

8. The information processing device according to claim 1, wherein the file is International Organization for Standardization Base Media File Format (ISOBMFF), and the first information is stored in SubSampleInformationBox.

9. The information processing device according to claim 1, wherein the file is International Organization for Standardization Base Media File Format (ISOBMFF), and the first information is stored in SampleGroupBox.

10. An information processing method comprising:

extracting, based on first information on a display timing of a sub-frame stored as metadata in a file, a sample including the sub-frame from a bit stream stored in the file in time for the display timing of the sub-frame; decoding the extracted sample; and constructing a point cloud for the sub-frame based on the first information in time for the display timing of the sub-frame included in the decoded sample.

11. An information processing device comprising:

an encoding unit that encodes as a sample a combined frame in which a plurality of frames are combined as sub-frames to generate encoded data;
a bit stream generation unit that generates a bit stream including the encoded data and generates first information on display timings of the sub-frames based on the bit stream; and
a file generation unit that generates a file for storing the bit stream and stores the first information as metadata in the file.

12. The information processing device according to claim 11, wherein the first information includes subframe_time_offset indicating an offset from a display timing of the sample.

13. The information processing device according to claim 12, wherein subframe_time_offset includes a sign.

14. The information processing device according to claim 12, wherein the file generation unit further stores, as the metadata, second information on display orders of the sub-frames in the file.

15. The information processing device according to claim 11, wherein the first information includes second information indicating display orders of the sub-frames and a duration indicating a length of a display period of each sub-frame.

16. The information processing device according to claim 15, wherein the second information includes a frame number indicating a display order in entire sequence.

17. The information processing device according to claim 15, wherein the second information includes a frame index indicating a display order in the sample.

18. The information processing device according to claim 11, wherein the file generation unit is International Organization for Standardization Base Media File Format (ISOBMFF), and the first information is stored in SubSampleInformation-Box of the file.

19. The information processing device according to claim 11, wherein the file generation unit is International Organization for Standardization Base Media File Format (ISOBMFF), and the first information is stored in SampleGroupBox of the file.

20. An information processing method comprising:

encoding as a sample a combined frame in which a plurality of frames are combined as sub-frames to generate encoded data;
generating a bit stream including the encoded data;
generating first information on display timings of the sub-frames based on the bit stream;
generating a file for storing the bit stream; and
storing the first information as metadata in the file.

Fig. 1

Fig. 2

Fig. 3

Fig. 4

Fig. 5

EP 4 496 328 A1

24

**TrackBox**

SampleTableBox

SampleDescription

GPCCSampleEntry

GPCCDecoder
ConfigurationRecord

shall include SPS, and optionally
includes GPS, APS and tile
inventory depends on sample entry
type

**MediaDataBox**

Sample

Sample

Sample

⋮

sequence of geometry slices and
attribute slices for 1 Point Cloud
frame, and optionally includes GPS,
APS and tile inventory depends on
sample entry type

G-PCC track

Fig. 6

EP 4 496 328 A1

```
aligned(8) class SubSampleInformationBox
        extends FullBox('subs', version, flags) {
        unsigned int(32) entry_count;
        int i,j;
        for (i=0; i < entry_count; i++) {
                unsigned int(32) sample_delta;
                unsigned int(16) subsample_count;
                if (subsample_count > 0) {
                        for (j=0; j < subsample_count; j++) {
                                if(version == 1)
                                {
                                        unsigned int(32) subsample_size;
                                }
                                else
                                {
                                        unsigned int(16) subsample_size;
                                }
                                unsigned int(8) subsample_priority;
                                unsigned int(8) discardable;
                                unsigned int(32) codec_specific_parameters;
                        }
                }
        }
}
```

Fig. 7

```
if (flags == 0) {
    unsigned int(8)         payloadType;
    if (payloadType == 4) { // attribute payload
        unsigned int(6)     attrIdx;
        bit(18)             reserved = 0;
    }
    else
        bit(24)             reserved = 0;
} else if (flags == 1) {
    unsigned int(1)         tile_data;
    bit(7)                  reserved = 0;
    if (tile_data)
        unsigned int(24)    tile_id;
    else
        bit(24)             reserved = 0;
}
```

Fig. 8

EP 4 496 328 A1

| METHOD 1 | INFORMATION ON DISPLAY TIMING OF SUB-FRAME IS STORED IN META INFORMATION STORAGE AREA. |
|---|---|
| METHOD 1-1 | INFORMATION ON DISPLAY TIMING OF SUB-FRAME IS OFFSET FROM SAMPLE DISPLAY TIMING. |
| METHOD 1-2 | INFORMATION ON DISPLAY TIMING OF SUB-FRAME IS SUB-FRAME DISPLAY ORDER AND SUB-FRAME DISPLAY PERIOD. |

Fig. 9

```
if (flags == 0) {
    unsigned int(8)         payloadType;
    if (payloadType == 4) { // attribute payload
        unsigned int(6)     attrIdx;
        bit(18)             reserved = 0;
    }
    else
        bit(24)             reserved = 0;
} else if (flags == 1) {
    unsigned int(1)         tile_data;
    bit(7)                  reserved = 0;
    if (tile_data)
        unsigned int(24) tile_id;
    else
        bit(24)             reserved = 0;
} else if (flags == 2) {
    unsigned int(1)         sign;
    unsigned int(31)        subsample_delta;
}
```

Fig. 10

Fig. 11

EP 4 496 328 A1

```
if (flags == 0) {
        unsigned int(8)            payloadType;
        if (payloadType == 4) { // attribute payload
                unsigned int(6)   attrIdx;
                bit(18)            reserved = 0;
        }
        else
                bit(24)            reserved = 0;
} else if (flags == 1) {
        unsigned int(1)            tile_data;
        bit(7)                     reserved = 0;
        if (tile_data)
                unsigned int(24) tile_id;
        else
                bit(24)            reserved = 0;
} else if (flags == 2) {
        unsigned int(16)           frame_number; // frame number attribute
        unsigned int(16)           duration; // subsample duration
}
```

Fig. 12

EP 4 496 328 A1

31

sample_delta (e.g. in 'stts' box)   3   2   3

decoding order
(single track STORING ORDER)

sample a          sample b          sample c

| GDU1 | ADU1 FN#0 | GDU2 | ADU2 FN#2 | GDU3 | ADU3 FN#1 | GDU4 | ADU4 FN#3 | GDU5 | ADU5 FN#5 | GDU6 | ADU6 FN#4 | GDU7 | ADU7 FN#6 | GDU8 | ADU9 FN#7 |

subsample

frame_number indicated in
codec_specific_parameters
0   2   1   3   5   4   6   7

duration indicated in
codec_specific_parameters
1   1   1   1   1   1   1   1

* timescale = 30 (time units/sec) in 'mvhd'
  duration = 1 CORRESPONDS TO 33 msec.

Fig. 13

Fig. 14

Fig. 15

```
      ( START FILE GENERATION PROCESSING )
                       │
                       ▼
      ┌───────────────────────────────────┐ S301
      │     GENERATE COMBINED FRAME       │
      └───────────────────────────────────┘
                       │
                       ▼
      ┌───────────────────────────────────┐ S302
      │   EXTRACT GEOMETRY AND ATTRIBUTES │
      └───────────────────────────────────┘
                       │
                       ▼
      ┌───────────────────────────────────┐ S303
      │   ENCODE GEOMETRY AND ATTRIBUTES  │
      │        TO GENERATE METADATA       │
      └───────────────────────────────────┘
                       │
                       ▼
      ┌───────────────────────────────────┐ S304
      │    GENERATE G-PCC BIT STREAM AND  │
      │ GENERATE INFORMATION ON DISPLAY TIMING │
      └───────────────────────────────────┘
                       │
                       ▼
      ┌───────────────────────────────────┐ S305
      │  GENERATE CONTENT FILE FOR STORING │
      │        G-PCC BIT STREAM AND STORE  │
      │  INFORMATION ON DISPLAY TIMING IN META │
      │       INFORMATION STORAGE AREA     │
      └───────────────────────────────────┘
                       │
                       ▼
      ┌───────────────────────────────────┐ S306
      │        OUTPUT CONTENT FILE        │
      └───────────────────────────────────┘
                       │
                       ▼
                  (    END    )
```

Fig. 16

Fig. 17

START REPRODUCTION
PROCESSING

ACQUIRE INFORMATION ON DISPLAY TIMING FROM
TRACK TO BE REPRODUCED IN CONTENT FILE
S401

EXTRACT SAMPLE BASED ON INFORMATION
ON DISPLAY TIMING
S402

DECODE EXTRACTED SAMPLE
S403

EXTRACT SUBSAMPLES FROM DECODED SAMPLE
S404

CONSTRUCT POINT CLOUD FOR SUB-FRAMES
ACCORDING TO DISPLAY TIMING
S405

GENERATE PRESENTATION INFORMATION
S406

PRESENT PRESENTATION INFORMATION
S407

END

Fig. 18

## INTERNATIONAL SEARCH REPORT

International application No.

**PCT/JP2023/007210**

### A. CLASSIFICATION OF SUBJECT MATTER

*H04N 21/854*(2011.01)i; *G06T 17/00*(2006.01)i; *G06T 19/00*(2011.01)i; *H04N 19/46*(2014.01)i; *H04N 21/238*(2011.01)i; *H04N 21/43*(2011.01)i

FI: H04N21/854; G06T17/00; G06T19/00; H04N19/46; H04N21/238; H04N21/43

According to International Patent Classification (IPC) or to both national classification and IPC

### B. FIELDS SEARCHED

Minimum documentation searched (classification system followed by classification symbols)

H04N21/854; G06T17/00; G06T19/00; H04N19/46; H04N21/238; H04N21/43

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/137642 A1 (SONY GROUP CORP.) 02 July 2020 (2020-07-02) <br> entire text, all drawings | 1-20 |
| A | WO 2019/082837 A1 (PANASONIC INTELLECTUAL PROPERTY CORPORATION OF AMERICA) 02 May 2019 (2019-05-02) <br> entire text, all drawings | 1-20 |
| A | WO 2020/241723 A1 (PANASONIC INTELLECTUAL PROPERTY CORPORATION OF AMERICA) 03 December 2020 (2020-12-03) <br> entire text, all drawings | 1-20 |
| A | GRAZIOSI, D et al., AN OVERVIEW OF ONGOING POINT CLOUD COMPRESSION STANDERDIZATION ACTIVITIES: VIDEO-BASED (V-PCC) AND GEOMETRY-BASED (G-PCC), APSIPA TRANSACTIONS ON SIGNAL AND INFORMATION PROCESSING, vol. 9, e13, CAMBRIGDE UNIVERSITY PRESS, 03 April 2020, 1-17 <br> entire text, all drawings | 1-20 |

☐ Further documents are listed in the continuation of Box C.        ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/007210**

| Patent document cited in search report | | | Publication date (day/month/year) | Patent family member(s) | | | Publication date (day/month/year) |
|---|---|---|---|---|---|---|---|
| WO | 2020/137642 | A1 | 02 July 2020 | US | 2022/0036593 | A1 | |
| | | | | entire text, all drawings | | | |
| | | | | EP | 3905532 | A1 | |
| | | | | CN | 113302844 | A | |
| | | | | KR | 10-2021-0108951 | A | |
| WO | 2019/082837 | A1 | 02 May 2019 | US | 2020/0252659 | A1 | |
| | | | | entire text, all drawings | | | |
| | | | | EP | 3703000 | A1 | |
| | | | | CN | 111213176 | A | |
| | | | | KR | 10-2020-0069307 | A | |
| WO | 2020/241723 | A1 | 03 December 2020 | US | 2022/0058834 | A1 | |
| | | | | entire text, all drawings | | | |
| | | | | CN | 113853635 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Information technology - MPEG-I (Coded Representation of Immersive Media) - Part 9: Geometry-based Point Cloud Compression. *Text of ISO/IEC FDIS 23090-9 Geometry-based Point Cloud Compression (draft 20)"), ISO/IEC 23090-9:2022(E), MDS19617, 2022/3/13*
- Information technology - Coding of audio-visual objects - Part 12: ISO base media file format, TECHNICAL CORRIGENDUM 1. *ISO/IEC FDIS 14496-12:2020(E), ISO/IEC 14496-12: 2015/Cor.1, ISO/IEC JTC 1/SC 29/WG 11, 2016/6/3*

- **SEJIN OH** ; **RYOHEI TAKAHASHI** ; **YOUNGKWON LIM**. Draft text of ISO/IEC FDIS 23090-18 Carriage of Geometry-based Point Cloud Compression Data. *ISO/IEC JTC 1/SC 29/WG 03 N0311, MDS20565, 2021/10/2*
- G-PCC codec description. *ISO/IEC JTC 1/SC 29/WG 7 N 0215, MDS20983, 2021/12/29*